# EUROPEAN PATENT SPECIFICATION

(11) **EP 1 806 488 B1**
(45) Date of publication and mention of the grant of the patent: **05.07.2017**
(21) Application number: 06731396.5
(22) Date of filing: 07.04.2006
(51) Int. Cl.: F01P 7/16, F16K 31/68

(54) **THERMOSTAT UNIT**
THERMOSTATEINHEIT
UNITÉ À THERMOSTAT

(30) Priority: 10.06.2005 JP 2005171002
(43) Date of publication of application: 11.07.2007
(73) Proprietor: Nippon Thermostat Co., Ltd., Kiyose-shi, Tokyo 204-0003 (JP)
(72) Inventor: KIMISHIMA, Kenji c/o NIPPON THERMOSTAT CO., LTD, Kiyose-shi, Tokyo 2040003 (JP); YAJIMA, Noriyasu c/o NIPPON THERMOSTAT CO., LTD, Kiyose-shi, Tokyo 2040003 (JP)
(74) Representative: Jannig, Peter
(86) International application number: PCT/JP2006/307449
(87) International publication number: WO 2006/132028

(56) References cited:
- EP-A1- 1 304 459
- JP-A- 63 082 944
- JP-A- 2002 021 562
- JP-A- 2002 021 562
- JP-A- 2002 038 951
- US-A- 3 907 199

## Description

### TECHNICAL FIELD

The present invention relates to a thermostat unit, and more particularly to a thermostat unit that is not embedded within an engine block or other engine component, but that can be installed as a single component in a predetermined location, for example near the engine.

### BACKGROUND ART

The majority of internal combustion engines cooling systems in current commercial vehicles use a water cooling system with a cooling fluid medium to cool the engine; this water-cooled cooling system is provided in the engines of four-wheeled vehicles as well as being widely used in two-wheel vehicles.

In the internal combustion engine cooling system of an engine using the water cooling method the cooling liquid is circulated to a radiator disposed to the outside of the engine body via rubber hose or similar connecting the radiator and engine body; the cooling system includes a radiator that plays the role of heat exchanger, a water pump that transmits the cooling water from the engine to the radiator, a thermostat that controls the flow of cooling liquid to maintain a suitable temperature in accordance with the temperature of the cooling liquid flowing from the radiator or flowing to the radiator, and a rubber hose or the like forming the circulation channel of the cooling liquid. The function of the cooling system is to maintain the engine at a suitable temperature, preventing overheating due to heat generation by the engine, as well as preventing overcooling during cold periods.

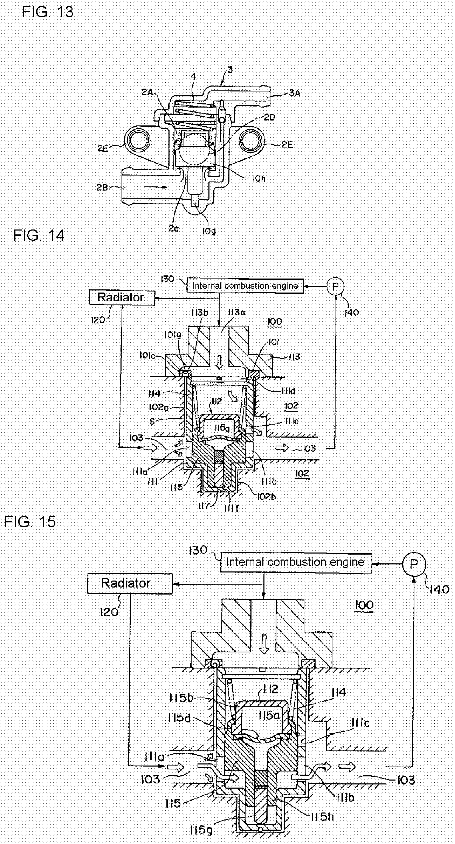

However, the applicant of the present application proposed a thermostat and thermostat installation structure used in this type of water cooling system in Japanese Patent Application Laid-open No. 2002-38951. This proposed thermostat and thermostat installation structure is explained based on Figs. 14 and 15.

The thermostat 100 is an embedded type thermostat embedded in an engine head 102, and includes a hollow cylindrical shaped valve body 111 in which an inlet aperture 111a and an outlet aperture 111b are formed in positions corresponding to a cooling liquid channel 103 formed in the engine head 102, a thermo-valve 112 housed within the valve body 111, a lid 113 screwed to the engine head 102 and that fixes the valve body 111, and a coil spring 114 disposed between the thermo-valve 112 and the lid 113 that presses the thermo-valve 112 in the downward direction in the figure.

Also, a bypass channel outlet aperture 111c is formed in the embedded type thermostat 100 located above the outlet aperture 111b of the cooling liquid channel 103 of the valve body 111. Also, The top surface of the valve body 111 is open, and, as shown in Fig. 14, when an element guide (valve body) 115 blocks the inlet aperture 111a and the outlet aperture 111b, the internal cavity of the valve body 111 and the bypass channel outlet aperture 111c are linked. Furthermore, a bypass channel 113a is formed in the lid 113, and an inlet aperture 111d is formed in the top of the valve body 111.

The valve body 111 is made from a hollow cylindrical member having an external diameter such that the valve body 111 can be inserted into an upper mating hole 102a and a lower mating hole 102b formed in the engine head 102; a clearance S is formed between the upper mating hole 102a and the external diameter of the valve body 111.

A connected groove 111f that divides the valve body 111 in two parts in the vertical direction is formed in the peripheral surface and bottom end surface of the valve body 111, and a ring shaped rubber member 117 is fitted to the groove 111f. The rubber member 117 is in close contact with the side wall of the upper mating hole 102a and the side wall of the lower mating hole 102b when the valve body 111 is inserted into the upper mating hole 102a and the lower mating hole 102b. The rubber member 117 prevents cooling liquid from flowing from the inlet aperture side (radiator side) to the outlet aperture side (engine side) through the clearance S, and has the function of compartmentalizing the inlet aperture side (radiator side) and the outlet aperture side (engine side).

Also, the seal member 101 is fitted between the lid 113 and the engine head 102. A jiggle ball housing member 101c that houses a jiggle ball 101g in the seal member 101 is connected to (linked to) the clearance S on the inlet aperture side (radiator side). Also, a top surface aperture in the jiggle ball housing member 101c is connected to (linked to) a lead in aperture 113b formed in the lid 113. The lead in aperture 113b is connected to the bypass channel 113a in the lid 113.

Therefore, the radiator side cooling liquid channel 103 is linked to the bypass channel 113a via the inlet aperture side (radiator side) clearance S, the jiggle ball housing member 101c, and the lead in aperture 113b. However, the jiggle ball housing member 101c houses the jiggle ball 101g, which blocks the lower surface aperture, so under normal conditions the cooling liquid channel 103 is not linked to the bypass channel 113a.

Next, the method of installing the embedded thermostat 100 is explained. As described above, the upper mating hole 102a and the lower mating hole 102b are formed in advance in the engine head 102. The valve body 111 into which the thermo-valve 112 has been assembled is fitted into the formed upper mating hole 102a and the lower mating hole 102b.

During this assembly, it is necessary to align the orientations and positions so that the inlet aperture 111a, the outlet aperture 111b, and the bypass outlet aperture 111c link with the cooling liquid channel 103 (see Figs. 14 and 15).

After the valve body 111 has been fitted, the seal member 101 is disposed straddling the valve body 111 and the engine head 102 so that the jiggle ball housing member 101c of the seal member 101 links with the clearance S on the inlet aperture side (radiator side), the lid 113 covers the seal member 101 from above, and the lid 113 is fixed to the engine head 102 by screwing.

When the thermostat 100 is fitted to the engine head 102, the cooling water channel 103 on the radiator 120 side links to the bypass channel 113a via the inlet aperture side (radiator side) clearance S, the jiggle ball housing member 101c, and the lead in aperture 113b.

Also, when the cooling liquid is injected into the radiator and water jacket, the cooling liquid is injected at high pressure. As a result of the cooling liquid being injected from the radiator 120 side, the air in the cooling liquid channel moves the jiggle ball 101g of the jiggle ball housing member 101c and opens the lower surface aperture.

As a result, air is discharged (bled) into the bypass channel 113a via the lead in aperture 113b, so it is possible to introduce the cooling liquid. The discharged air is circulated, and discharged from the air bleed portion of the radiator 120, and introduction of cooling liquid is completed.

Furthermore, the following is an explanation of the operation of the thermostat 100. (See Figs. 14 and 15). First, the action of the embedded type thermostat 100 in changing from the closed state to the open state is explained.

Before the engine is warmed up, when the temperature of the cooling liquid in the cooling liquid channel 103 is low, the element guide 115 closes the channel, as shown in Fig. 14, and during this time the bypass outlet aperture 111c is linked to the bypass channel inlet aperture 111d. In other words, the cooling liquid passes from an internal combustion engine 130, through the bypass channel 113a, to the cooling liquid channel 103 and a water pump 140, and again returns to the internal combustion engine 130.

As time passes the temperature of the cooling liquid within the cooling liquid channel 103 rises, wax 115a within a wax case 115b expands and increases in volume, and as the volume expands a diaphragm 115d expands downwards, and a piston 115g projects from a guide member 115h.

However, the tip of the piston 115g is always in contact with the inner surface of the bottom of the valve body 111, so in reality the element guide 115 itself moves relative to the piston 115g and presses upwards against the reaction force of the coil spring 114 (see Fig. 15).

When the thermo-valve 112 slides upwards, the inlet aperture 111a and the outlet aperture 111b of the valve body 111 that were closed by the element guide (valve body) 115 are opened and become linked to the cooling water channel 103. When the cooling water channel 103 is in the open state, the bypass channel outlet aperture 111c is closed by the side wall of the element guide (valve body) 115. As a result, as shown in Fig. 15, the bypass channel is closed, and the cooling liquid flows from the radiator side to the engine side.

Further prior art is disclosed in document JP 2002 021562A.

### DISCLOSURE OF THE INVENTION

However, the installation structure of the thermostat disclosed in Japanese Patent Application Laid-open No. 2002-38951 had the following technical problems.

This thermostat installation structure had the technical problem that time is required for the thermostat installation work to install the thermostat 100 in the mating holes 102a, 102b formed in the engine head 102.

In particular, when installing the thermostat 100, the front of the inlet aperture 111a must face towards the cooling liquid channel 103 and the outlet aperture 111b must face towards the cooling liquid channel 103, so installation accuracy is required.

Also, it is necessary to use the seal member 101 that houses the jiggle ball 101g in this thermostat structure, which caused the cost to increase.

Furthermore, the jiggle ball housing member 101c must be installed directly above the cooling liquid channel 103, so installation accuracy was required.

In addition, the clearance S is formed by the difference in the dimensions of the diameters of the mating hole 102a and the valve body 111, so there was the problem that if the difference in dimension of the two is small it is not possible to bleed air from the channel, and on the other hand if the difference in dimensions of the two is large it is difficult to securely fix the valve body 111 within the mating hole 102a.

Furthermore, this thermostat installation structure uses the rubber member 117 to prevent cooling water from flowing from the inlet aperture side (radiator side) to the outlet aperture side (engine side) via the clearance S.

Therefore, when the rubber member 117 degrades there is the problem that it is not possible to fully close the channel on the radiator side by which cooling water flows from the inlet aperture side (radiator side) to the outlet aperture side (engine side) through the clearance S, even when the engine is warming up.

In this way, in the conventional thermostat installation structure there are various problems because it is necessary to embed the thermostat in the mating holes formed in the engine head, so it is desirable to have a new thermostat installation structure that does not require embedding in mating holes formed in the engine head.

In the prior art described in document JP 2002 021562A the above mentioned problems are not solved or at least not solved satisfactorily.

The present invention solves the above mentioned problems, and a first object of the present invention is to provide a thermostat unit that is installed on the vehicle (engine or similar) without embedding the thermostat within the engine block or other components of the engine.

Also, the second object is to provide a thermostat unit with very few components, whose assembly is easy, and whose cost can be reduced.

Furthermore, the third object is to provide a thermostat unit capable of fully separating the radiator side channel and the engine side channel.

The thermostat unit according to the present invention that solves the above tasks comprises: a casing comprising a first cooling liquid channel, a second cooling liquid channel, and a thermostat housing member that is linked to the first cooling liquid channel and the second cooling liquid channel; a lid having a third cooling liquid channel that is linked to the thermostat housing member and that covers the thermostat housing member; and a thermostat having an element guide that advances and retracts in accordance with variations in temperature of cooling liquid flowing in the thermostat housing member, wherein when the first cooling liquid channel is blocked by the element guide the third cooling liquid channel, the thermostat housing member on the third cooling liquid channel side, and the second cooling liquid channel are linked, and when the element guide opens the first cooling liquid channel, the thermostat housing member on the first cooling liquid channel side and the second cooling liquid channel are linked, wherein the first cooling liquid channel is opened and closed by the bottom surface of the element guide, and when the element guide opens the first cooling liquid channel, the thermostat housing member on the third cooling liquid channel side and the second cooling liquid channel are isolated by an external peripheral surface of the element guide.

In this way, the thermostat is housed within the casing, and the casing is covered by the lid, so the thermostat unit is unitized, and can be installed as one component on a vehicle (engine or the like) without being embedded in the engine block or another engine component.

Also, the element guide can advance and retract within the casing, so a rubber member, valve body, and other components that are conventionally used are unnecessary, and it is possible to reduce the number of components.

Furthermore, it is unnecessary to align the directions of the channels and embed the thermostat unit as in the conventional art, so the thermostat unit can be easily and quickly installed.

Also, in the thermostat unit according to the present invention, when the first cooling liquid channel is blocked by the element guide, the first cooling liquid channel and the second cooling liquid channel are not linked, and the third cooling liquid channel, the third cooling liquid channel side of the thermostat housing member, and the second cooling liquid channel are linked.

On the other hand, when the first cooling liquid channel is opened by the element guide, the first cooling liquid channel side of the thermostat housing member and the second cooling liquid channel are linked, and the third cooling liquid channel and the second cooling liquid channel are not linked.

In this way, the channels are switched as the element guide advances and retracts, so it is possible to clearly ensure the linked state and unlinked state of each cooling channel.

Also, it is desirable that the first cooling liquid channel and the thermostat housing member are linked by an aperture, the aperture being opened and closed by the end surface of the element guide, the second cooling liquid channel is formed at a predetermined distance from the aperture, and when the first cooling liquid channel is opened by the element guide, the cooling liquid of the first cooling liquid channel flows to the second cooling liquid channel via the aperture, and the clearance between the internal wall of the thermostat housing member and the external peripheral surface of the element guide.

In this way, the second cooling liquid channel is formed in a position separated from the aperture by a predetermined dimension, so that when the element guide opens the first cooling liquid channel, the cooling liquid flows to the second cooling liquid channel via the aperture and the clearance between the internal wall of the thermostat housing member and the external peripheral surface of the element guide. This is a very small amount of cooling liquid, so the temperature of the wax gradually reduces.

As a result, the element guide gradually rises, the second cooling liquid channel gradually opens, and cooling liquid flows from the first cooling liquid channel to the second cooling liquid channel, so the so-called hunting phenomenon is prevented.

Also, it is desirable that the internal peripheral surface of the edge of the lid has a sloping surface that starts at a position at a radius R1 from the center of the thermostat housing member and has an angle θ1, and the outer peripheral surface of the top end of the casing has a sloping surface starting from a position at a radius R2 from the center of the thermostat housing member and has an angle θ2, and R1 is smaller than R2, and θ1 and θ2 are set to the same angle.

According to this configuration, it is possible to ensure close contact between the two sloping surfaces, so sealing can be improved. Also, even if there are forming errors, it is possible to obtain a fixed connection surface. Also, it is possible to securely join the two by laser light.

Also, it is desirable that an end of the lid is fitted to the external peripheral surface of an end of the casing, and the internal peripheral surface of the end of the lid is connected to the external peripheral surface of the top end of the casing by laser light and made integral.

In this way, the casing and the lid can easily be made integral by joining using laser light.

Furthermore, it is desirable that in the casing and the lid an air bleed channel is formed linking the first cooling liquid channel and the third cooling liquid channel, a jiggle ball is housed in the air bleed channel, and the air bleed channel is opened and closed by the jiggle ball.

In this way, an air bleed channel is formed in the casing and the lid, and a jiggle ball is housed in the air bleed channel, so it is not necessary to use a seal member that houses the jiggle ball as in conventional art, so it is possible to reduce cost. Also, the air bleed channel is formed with a fixed diameter, not as a clearance resulting from the difference of two dimensions as in conventional art, so it is possible to obtain a fixed performance.

Also, it is desirable to form a circular groove concentric with the thermostat housing member in the outside of the open end surface of the thermostat housing member of the casing, and the opening of the air bleed channel is formed in the bottom surface of the groove.

According to this configuration, by housing the jiggle ball in an arbitrary position in the groove, the jiggle ball can be housed in the air bleed channel by the flow of the cooling liquid, so assembly can be easily carried out.

Also, as a result of this configuration, even if the air bleed channel of the casing and the air bleed channel of the lid are not located on the same straight line, the air bleed channel can be opened and closed by the jiggle ball.

Furthermore, it is desirable that the thermostat unit further comprises a jiggle ball retaining member housed in the air bleed channel on the casing side that houses the jiggle ball in the air bleed channel on the casing side.

By housing the jiggle ball retaining member in the air bleed channel on the casing side, cooling liquid is prevented from entering the thermostat housing member from the air bleed channel via the end surfaces of the casing and lid.

Also, it is desirable that the jiggle ball retaining member is formed in a cylindrical shape, and formed with vertical symmetry. As a result of forming the jiggle ball retaining member with vertical symmetry in this way, the jiggle ball retaining member can be housed in the air bleed channel without considering directionality.

Also, it is desirable that the first cooling liquid channel is a radiator side cooling liquid channel, the second cooling liquid channel is an engine side cooling liquid channel, and the third cooling liquid channel is a bypass side cooling liquid channel.

According to the invention as described above, a thermostat unit can be obtained that can be installed as one component on a vehicle (engine, or similar) without being embedded within the engine block or another engine component. Also, a thermostat unit can be obtained for which the number of components is very few, so assembly is simple, and cost can be reduced. Furthermore, a thermostat unit can be obtained in which it is possible to completely separate the radiator side channel from the engine side channel, even after long use.

### BRIEF DESCRIPTION OF THE DRAWINGS

Fig. 1 is an isometric view of the first embodiment;
Fig. 2 is a section through the thermostat unit shown in Fig. 1;
Fig. 3 is an auxiliary view in the direction III shown in Fig. 1;
Fig. 4 is an auxiliary view in the direction IV shown in Fig. 1;
Fig. 5 is a section view showing the connection between the casing and lid;
Fig. 6 shows the state of the thermostat during operation;
Fig. 7 shows the state of the thermostat during operation;
Fig. 8 is a section view showing a second embodiment of the thermostat unit according to the present invention;
Fig. 9 is an isometric view of the casing member shown in Fig. 8;
Fig. 10 is a section view showing a third embodiment of the thermostat unit according to the present invention;
Fig. 11A is an isometric view of the casing member and the jiggle ball retaining member shown in Fig. 10; Fig. 11B is a section through the jiggle ball retaining member;
Fig. 12 is a section view showing a fourth embodiment of the thermostat unit according to the present invention;
Fig. 13 is a section view showing the operating state of the fourth embodiment of the thermostat unit according to the present invention;
Fig. 14 is a schematic view showing the operating state of a conventional thermostat; and
Fig. 15 is a schematic view showing the operating state of a conventional thermostat.

### BEST MODE FOR CARRYING OUT THE INVENTION

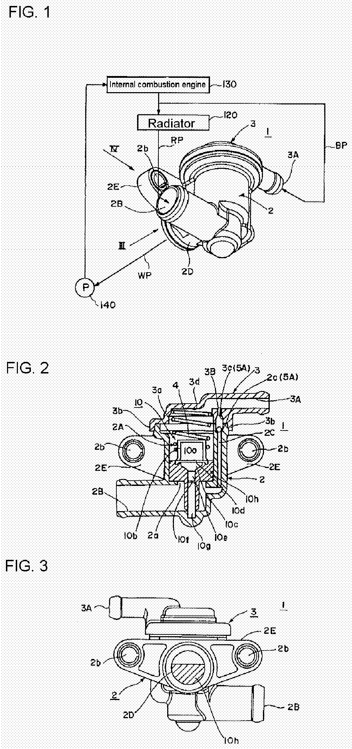

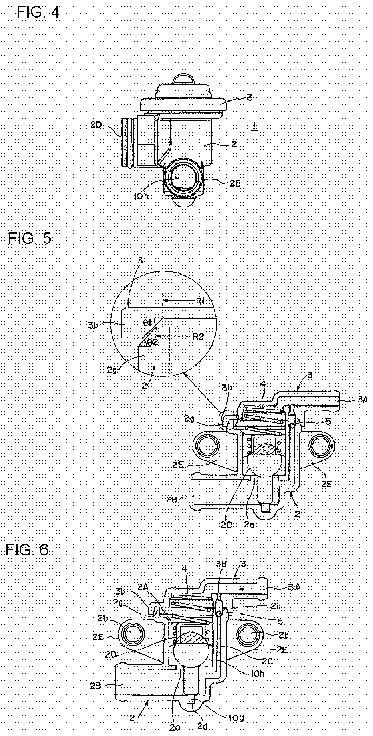

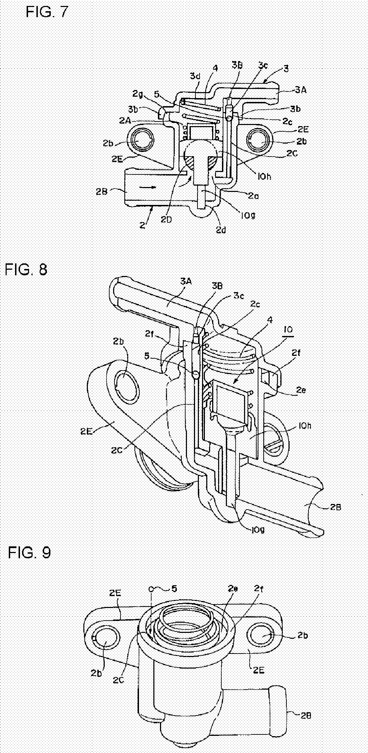

Next, a first embodiment of the thermostat unit according to the present invention is explained based on Figs. 1 through 7. Fig. 1 is an isometric view of the first embodiment; Fig. 2 is a section through the thermostat unit shown in Fig. 1; Fig. 3 is an auxiliary view in the direction III shown in Fig. 1; Fig. 4 is an auxiliary view in the direction IV shown in Fig. 1; Fig. 5 is a section view showing the connection between the casing and lid; Figs. 6 and 7 correspond to Fig. 2, and show the state of the thermostat during operation.

As shown in Figs. 1 and 2, the thermostat unit 1 is an externally installed thermostat that can be installed on a predetermined location on the outside of an engine head (not shown in the drawings) or similar, and comprises a single component that houses a thermostat (valve) 10.

In other words, the thermostat unit 1 includes the thermostat (valve) 10, a casing 2 that houses the thermostat (valve) 10, a lid 3 that covers a housing member 2A of the thermostat (valve) 10 in the casing 2, and a coil spring 4 fitted between the thermostat (valve) 10 and the lid 3 that presses on the top of an element guide 10h as shown in the figures.

As stated above, the housing member 2A that houses the thermostat (valve) 10 is formed in the center of the casing 2, and the top surface of the housing member 2A is open.

Also, a cooling liquid channel 2B through which cooling liquid flows from the radiator side is formed in the bottom of the casing 2. The radiator side cooling liquid channel 2B is formed substantially horizontally, and links to the housing member 2A via an aperture 2a.

Furthermore, at the innermost portion of the radiator side cooling liquid channel 2B an open air bleed channel 2C is formed curving from the substantially horizontal attitude to near the open portion of the housing member 2A.

Also, an engine side (water pump side) cooling liquid channel 2D is formed in the casing 2 located higher than the radiator side cooling liquid channel 2B and whose direction is offset by 90 degrees from the direction of the radiator side cooling liquid channel 2B (see Fig. 1).

Also, a pair of flanges 2E is formed projecting to the left and right of the casing 2, and through holes 2b are formed in the flanges 2E. The through holes 2b are used to install the casing 2 on the engine head (not shown in the drawings) or similar, by inserting bolts (not shown on the drawings).

Next, the lid 3 is explained. A bypass channel side cooling liquid channel 3A is formed in the lid 3. The bypass side cooling liquid channel 3A extends in the horizontal direction and then curves to form an opening in the bottom surface of the lid 3. The opening 3a is formed with a larger diameter than the bypass side cooling liquid channel 3A, but is formed with a diameter smaller than the housing member 2A.

Also, a peripheral wall 3b is formed in the bottom surface of the lid 3, that is installed so as to cover the outer peripheral surface of a top portion 2g of the housing member 2A, so that the space of the housing member 2A links with the bypass side cooling liquid channel 3A.

As shown in Fig. 5, the inner surface of the peripheral wall 3b has a sloping surface that starts at a position at a radius R1 from the center of the housing member 2A, and has an angle θ1. Also, the external surface of the top portion 2g of the housing member 2A has a sloping surface that starts at a position at a radius R2 from the center of the housing member 2A, and has an angle θ2. Also, R1 is smaller than R2, and the angles θ1 and θ2 are formed to be equal.

As a result, the internal surface of the peripheral wall 3b and the external surface of the top portion 2g of the housing member 2A are in area contact. By ensuring area contact of the two in this way, it is possible to ensure close contact between the two, and improve sealing. Also, even if forming errors occur it is possible to obtain a fixed connection surface. Also, using laser light it is possible to securely connect the two.

Also, a flat bottom surface 3d is formed that contacts an end of the coil spring 4 when the lid 3 is fitted to the casing 2.

Furthermore, an air bleed channel 3B is formed in the lid 3 that links with the air bleed channel 2C.

Also, as stated above, the air bleed channel 2C is formed in the casing 2, and a large diameter portion 2c is formed in the top surface of the air bleed channel 2C. On the other hand, a large diameter portion 3c is formed in the bottom surface of the air bleed channel 3B of the lid 3, and by connecting the large diameter portion 2c and the large diameter 3c a housing portion 5A for a jiggle ball 5 is formed.

The thermostat (thermo-valve) 10 includes a wax case 10b that that contains wax 10a which is an expanding body, a diaphragm 10d that transmits the expansion and shrinkage of the wax 10a to a top layer semi-liquid 10c, the semi-liquid 10c that transmits the responses of the diaphragm 10d to a bottom layer rubber piston 10e, a back up plate 10f that transmits the responses of the semi-liquid 10c to a bottom layer piston 10g, and an element guide (valve body) 10h that contains the piston 10g that presses against the internal wall of the radiator side cooling liquid channel 2B, and the other components that are in a stacked condition, similar to a conventional thermostat (thermo-valve).

However, the thermostat (thermo-valve) 10 used in the present invention does not use a valve body 111 that houses the element guide (valve body) 10h. In other words, the thermostat (thermo-valve) 10 is housed in the housing member 2A of the casing 2 as described above, so the valve body 111 is unnecessary. Also, the rubber member 117 that is conventionally used is also unnecessary.

Also, in the thermostat (thermo-valve) 10, opening and closing of the aperture 2a of the radiator side cooling liquid channel 2B is controlled by the bottom surface of the element guide (valve body) 10h. Also, opening and closing of the engine side (water pump side) cooling liquid channel 2D is controlled by the side surface (peripheral surface) of the element guide (valve body)10h.

In other words, as shown in Figs. 2 and 6, when the aperture 2a of the radiator side cooling water channel 2B is closed by the element guide (valve body) 10h, cooling liquid that has flowed in from the bypass side cooling liquid channel 3A passes through the housing member 2A positioned on the bypass side, and flows to the engine side (water pump side) cooling water channel 2D.

Furthermore, the radiator side cooling liquid channel 2B and the engine side (water pump side) cooling liquid channel 2D are isolated, with the radiator side cooling liquid channel 2B being closed.

On the other hand, as shown in Fig. 7, when the aperture 2a of the radiator side cooling liquid channel 2B is opened by the element guide (valve body) 10h, the cooling liquid that flows in from the radiator side cooling liquid channel 2B flows past the aperture 2a and the housing member 2A to the engine side cooling liquid channel 2D. At this time, the bypass side cooling liquid channel 3A and the engine side (water pump side) cooling liquid channel 2D are isolated by the outer peripheral surface of the element guide 10h.

In this way, the opening and closing of the aperture 2a of the radiator side cooling liquid channel 2B and the opening and closing of the engine side (water pump side) cooling liquid channel 2D are controlled by the vertical movements (advancement and retraction) of the element guide (valve body) 10h.

Therefore, the diameter of the element guide (valve body) 10h is formed larger than the diameter of the aperture 2a, and approximately the same as the diameter of the housing member 2A.

As shown in Figs. 6 and 7, the entire channel of the engine side (water pump side) cooling liquid channel 2D does not open, a part opens. Therefore, it is necessary to determine the area of the open cooling liquid channel 2D taking the flow rate of cooling liquid into account.

Next, the method of assembly and installation of the thermostat unit 1 is explained.

First, the casing 2 and the lid 3 are formed in the predetermined shape from a metal such as aluminum or a heat resistant synthetic resin. Next, the thermostat (thermo-valve) 10 is housed in the housing member 2A of the casing 2 that has been formed to the predetermined shape. At this time, the element guide 10h projects into the radiator side cooling liquid channel 2B from the aperture 2a, and contacts the internal wall of the radiator side cooling liquid channel. Also, the end of the piston 10g mates with a depression formed in the internal wall of the radiator side cooling liquid channel 2B, to fix the position of the end of the piston 10g.

Then, the bottom end of the coil spring 4 is brought into contact with the top end of the element guide (valve body) 10h, so that the coil spring 4 is housed in the housing member 2A.

Also, the jiggle ball 5 is housed in the large diameter portion 2c of the air bleed channel 2C.

After the jiggle ball 5 has been housed, the lid 3 is installed so as to cover and close the housing member 2A. When installing the lid 3, the end of the coil spring 4 contacts the bottom surface 3d of the lid 3, and the lid 3 is installed so that the large diameter portion 2c and the large diameter portion 3c of the air bleed channels 2C, 3B coincide.

At this time, the peripheral wall 3b is formed in the lid 3, so the inside of the peripheral wall 3b is mated with the top end of the housing member 2A, and the installation position of the lid 3 is determined so that the direction of the radiator side cooling liquid channel 2A is parallel with the bypass side cooling liquid channel 3A.

It is not easy to ensure that the direction of the radiator side cooling liquid channel 2B is parallel with the direction of the bypass side cooling liquid channel 3A, so marks may be provided in advance on the external surface of the casing 2 and on the external surface of the lid 3, so that the installation position of the lid 3 can be determined by aligning the two marks.

In this way, the lid 3, that is installed to cover the housing member 2A of the casing 2, and the casing 2 are integrated and formed into a single component using laser light of another joining method to form the connection.

Then bolts are inserted into the through holes 2b of the flanges 2E of the thermostat unit 1 and the thermostat unit 1 is installed on the predetermined position on the vehicle, for example the outer surface of the engine head.

After this installation is complete, as shown in Fig. 1, the radiator side cooling liquid channel 2B and a radiator pipe RP, the bypass side cooling liquid channel 3A and a bypass pipe BP, and also the engine side (water pump side) cooling liquid channel 2D and a water pump pipe WP are connected, which completes the installation.

In the installed state of the thermostat unit 1, the element guide (valve body) 10h blocks the aperture 2a of the radiator side cooling liquid channel 2B, so the bypass side cooling liquid channel 3A and the engine side (water pump side) cooling liquid channel 2D are linked. Also, the radiator side cooling liquid channel 2B is linked to the bypass side cooling liquid channel 3A via the air bleed channels 2C, 3B.

However, the jiggle ball 5 is housed in the jiggle ball housing member 5A, and the bottom surface aperture is blocked, so in normal conditions the radiator side cooling liquid channel 2B is not linked to the bypass side cooling liquid channel 3A.

When cooling liquid is poured into the radiator and water jacket, the cooling liquid is poured in at high pressure. Also, the jiggle ball 5 in the jiggle ball housing member 5A is moved by the cooling liquid poured in from the radiator side, and the bottom surface aperture opens.

As a result, air in the cooling liquid channel is discharged (air is bled) to the bypass side cooling liquid channel 3A via the radiator side cooling liquid channel 2B and the air bleed channels 2C, 3B, so it is possible to introduce the cooling liquid. The discharged air is circulated, and discharged to the outside from an air bleed member in the radiator, and introduction of cooling liquid is complete.

Furthermore, the operation of the thermostat (thermo-valve) 10 is explained. (See Figs. 6 and 7). First, the operation of changing from the closed state to the open state is explained.

Before the engine has warmed up when the temperature of the cooling liquid within the housing member 2A of the casing 2 is low, as shown in Fig. 6, the bottom surface of the element 10h blocks the aperture 2a, so the bypass side cooling liquid channel 3A, the housing member 2A, and the engine side (water pump side) cooling liquid channel are linked.

Therefore, the cooling liquid is circulated from the internal combustion engine 130, the bypass side cooling liquid channel 3A, the housing member 2A, and the engine side (water pump side) cooling liquid channel 2D, to the internal combustion engine 130.

As time passes the temperature of the cooling liquid within the housing member 2A rises, the wax 10a within the wax case 10b expands and the volume increases, the diaphragm 10d expands downwards as the volume increases, and the piston 10g projects from the element guide 10h.

However, the tip of the piston 10g is always in contact with the depression 2d in the internal wall of the radiator side cooling liquid channel 2B, so actually the element guide 10h itself moves relative to the piston 10g and presses upwards against the reaction force of the coil spring 4 (see Fig. 7).

Then, when the element guide 10h slides upwards (retracts), the aperture 2a that was closed by the bottom surface of the element guide (valve body) 10h is opened, and the radiator side cooling liquid channel 2B and the housing member 2A below the element guide (valve body) 10h are linked.

Also, as a result of the upward sliding motion (retracting motion) of the element guide 10h, the housing member 2A below the element guide (valve body) 10h and the engine side (water pump side cooling liquid channel 2D are linked, and cooling liquid flows from the radiator side to the engine side.

When the radiator side cooling liquid channel 2B and the engine side (water pump side cooling liquid channel 2D are linked, the bypass side aperture (the top half of the cooling liquid channel 2D) of the engine side (water pump side) cooling liquid channel 2D is closed by the side surface of the element guide (valve body) 10h. Therefore, cooling liquid does not flow from the bypass side cooling liquid channel 3A to the engine side cooling liquid channel 2D.

Next, the second embodiment of the thermostat unit according to the present invention is explained. This embodiment, as shown in Figs. 8 and 9, has the characteristic that a circular groove 2e is formed around the periphery of the housing member 2A concentric with the housing member, and the aperture of the air bleed channel 2C is formed in the bottom surface of the groove 2e. The lid 3 is installed so that the lid 3 covers an outer side wall 2f that forms the groove 2e.

In this way, the aperture of the air bleed channel 2C is provided in the bottom surface of the circular groove 2e, so the jiggle ball 5 is not necessarily housed in the air bleed channel 2C. In other words, when filling the thermostat unit with cooling liquid, the jiggle ball 5 is moved within the groove 2e by the cooling liquid, so ultimately the jiggle ball 5 will drop into the air bleed channel 2C.

Therefore, the thermostat unit in which the groove 2e is formed has the effect that assembly is easy.

Also, as a result of adopting this configuration, even if the air bleed channel of the casing and the air bleed channel of the lid are not positioned on the same line, it is possible to open and close the air bleed channel by the jiggle ball.

In other words, if the orientation of the third channel is changed, only the installation direction of the lid with respect to the casing has to be changed, and it is not necessary to make a new lid. In particular, the lid and casing are not bolted together, they are fused together, so by simply changing the orientation of installation of the lid (fixing direction) the orientation of the third channel can be easily changed without making a new lid.

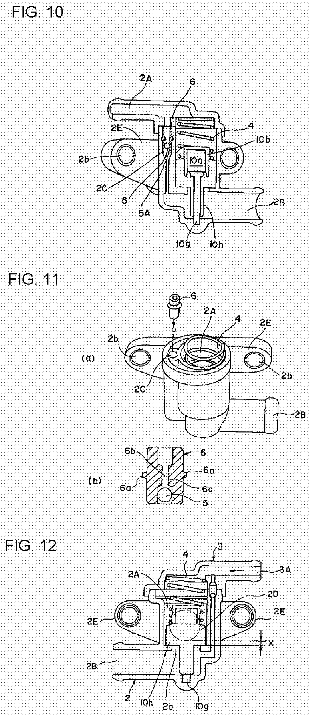

Also, a third embodiment of the thermostat unit according to the present invention is explained. As shown in Figs. 10 and 11, this embodiment has the characteristic that a jiggle ball retaining member 6 is inserted in the air bleed channel 2C of the casing 2, and the jiggle ball housing member 5A is formed inside the casing 2.

As shown in Fig. 11, the jiggle ball retaining member 6 has a cylindrical shape, and a projecting portion 6a that projects out from the external surface about midway in the axial direction. Also, an air bleed channel 6b is formed within the jiggle ball retaining member 6, and about midway in the axial direction a projecting portion 6c is formed that projects inside the air bleed channel 6b. Therefore, the movement of the jiggle ball 5 is restricted by the projecting portion 6c, and cannot move higher than the projecting portion 6c. The jiggle ball retaining member 6 is formed symmetrically in the vertical direction, so there is no restriction on insertion direction, so the jiggle ball retaining member 6 can be easily inserted into the air bleed channel 2C.

Furthermore, specifically in the first embodiment the jiggle ball housing member 5A is formed between the end surfaces of the casing 2 and the lid 3, and although the inner surface of the peripheral wall of the lid 3 and the outer peripheral surface of the casing 2 are fixed by laser welding or similar, the end surfaces of the casing 2 and the lid 3 are not welded.

Therefore, there is the potential problem that during engine warm up, the cooling liquid of the radiator side cooling liquid channel will pass through the air bleed channel 2C, and enter the housing member 2A from the end surfaces of the casing 2 and the lid 3.

In the third embodiment, by inserting the jiggle ball retaining member 6 in the air bleed channel 2C of the casing 2, the jiggle ball housing member 5A is formed within the casing 2, therefore the air bleed channel 2C is closed by the jiggle ball 5 that is positioned towards the radiator side cooling liquid channel 2B of the end surfaces of the casing 2 and the lid 3.

As a result, the cooling liquid of the radiator side cooling liquid channel 2B is obstructed by the jiggle ball 5 and does not reach as far as the end surfaces of the casing 2 and the lid 3, so the cooling liquid does not ingress into the housing member 2A.

Also, a fourth embodiment of the thermostat unit according to the present invention is explained. As shown in Figs. 12 and 13, this embodiment has the characteristic that the engine side (water pump side) cooling liquid channel 2D formed in the casing 2 is formed shifted by the dimension X towards the bypass side cooling liquid channel 3A.

In the first embodiment, the bottom end of the engine side (water pump side) cooling liquid channel 2D is located at the top end of the aperture 2a, so when the element guide 10h rises, cooling liquid immediately enters the engine side (water pump side) cooling liquid channel 2D from the radiator side cooling liquid channel 2B. Because of this configuration, when the element guide 10h rises (when the valve rises), low temperature cooling liquid from the radiator side cooling liquid channel 2B rapidly lowers the temperature of the wax, so the element guide 10h is lowered and the valve closes. In other words, repeated opening and closing of the valve, or the phenomenon known as hunting, occurs.

In the fourth embodiment, the bottom end of the engine side (water pump side) cooling liquid channel 2D formed in the casing 2 is positioned at a dimension X from the top surface of the aperture 2a, and furthermore, a clearance is formed between the internal wall of the casing 2 (housing member 2A) and the external peripheral wall of the element guide 10h.

According to this configuration, when the element guide 10h rises by a small amount, as shown in Fig. 13, cooling liquid flows through the aperture 2a and the clearance between internal wall of the casing 2 (housing member 2A) and the external peripheral wall of the element guide 10h, and flows from the housing member 2A on the bypass side cooling liquid channel 3A side to the engine side (water pump side) cooling liquid channel 2D.

At this time, the bottom end of the engine side (water pump side) cooling liquid channel 2D is formed in a position that is the dimension X from the top surface of the aperture 2A, so the radiator side cooling liquid channel 2B side of the engine side (water pump side) cooling liquid channel 2D is not open. Therefore, a very small amount of cooling liquid flows through the aperture 2a and the clearance between the internal wall of the casing 2 (housing member 2A) and the external peripheral wall of the element guide 10h, so the temperature of the wax gradually reduces.

As a result, the element guide 10h gradually rises, the engine side (water pump side) cooling liquid channel 2D opens, and the so-called hunting phenomenon is prevented.

### INDUSTRIAL APPLICABILITY

The thermostat unit according to the present invention may be used in engine cooling systems for the engines of four-wheeled vehicles, as well as widely used for two-wheeled vehicles.

## Claims

1. A thermostat unit (1), comprising:
a casing (2) comprising a first cooling liquid channel (2B), a second cooling liquid channel (2D), and a thermostat housing member (2A) that is linked to the first cooling liquid channel (2B) and the second cooling liquid channel (2D);
a lid (3) having a third cooling liquid channel (3A) that is linked to the thermostat housing member (2A) and that covers the thermostat housing member (2A); and
a thermostat (10) having an element guide (10h) that advances and retracts in accordance with variations in temperature of cooling liquid flowing in the thermostat housing member (2A), wherein
when the first cooling liquid channel (2B) is blocked by the element guide (10h) the third cooling liquid channel (3A), the thermostat housing member (2A) on the third cooling liquid channel (3A) side, and the second cooling liquid channel (2D) are linked, and when the element guide (10h) opens the first cooling liquid channel (2B), the thermostat housing member (2A) on the first cooling liquid channel (2B) side and the second cooling liquid channel (2D) are linked,
**characterized in that**
the first cooling liquid channel (2B) is opened and closed by the bottom surface of the element guide (10h), and
when the element guide (10h) opens the first cooling liquid channel (2B), the thermostat housing member (2A) on the third cooling liquid channel (3A) side and the second cooling liquid channel (2D) are isolated by an external peripheral surface of the element guide (10h).

2. The thermostat unit according to claim 1, wherein
the first cooling liquid channel (2B) and the thermostat housing member (2A) are linked by an aperture (2a), the aperture (2a) is opened and closed by the end surface of the element guide (10h), and the second cooling liquid channel (2D) is formed at a predetermined distance from the aperture (2a), and
when the first cooling liquid channel (2B) is opened by the element guide (10h), the cooling liquid of the first cooling liquid channel (2B) flows to the second cooling liquid channel (2D) via the aperture (2a), and clearance between the internal wall of the thermostat housing member (2A) and the external peripheral surface of the element guide (10h).

3. The thermostat unit according to any of claims 1 through 2, wherein
the internal peripheral surface of the edge of the lid (3) has a sloping surface that starts at a position at a radius R1 from the center of the thermostat housing member (2A) and has an angle θ1, the outer peripheral surface of the top end of the casing (2) has a sloping surface that starts from a position at a radius R2 from the center of the thermostat housing member (2A) and has an angle θ2, and
R1 is smaller than R2, and θ1 and θ2 are set to the same angle.

4. The thermostat unit according to any of claims 1 through 3, wherein an end of the lid (3) is fitted to the external peripheral surface of an end of the casing (2), and the internal peripheral surface of the end of the lid (3) is connected to the external peripheral surface of the top end of the casing (2) by laser light and made integral.

5. The thermostat unit according to claim 1, wherein in the casing (2) and the lid (3) an air bleed channel (2C) is formed linking the first cooling liquid channel (2B) and the third cooling liquid channel (3A), a jiggle ball (5) is housed in the air bleed channel (2C), and the air bleed channel (2C) is opened and closed by the jiggle ball (5).

6. The thermostat unit according to claim 5, wherein a circular groove (2e) concentric with the thermostat housing member (2A) is formed in the outside of the open end surface of the thermostat housing member (2A) of the casing (2), and an opening of the air bleed channel (2C) is formed in a bottom surface of the groove (2e).

7. The thermostat unit according to claim 5, that houses the jiggle ball (5) in the air bleed channel (2C) on the casing (2) side, and that further comprises a jiggle ball retaining member (6) housed in the air bleed channel (2C) on the casing (2) side.

8. The thermostat unit according to any of claims 1 through 7, wherein the first cooling liquid channel (2B) is a radiator side cooling liquid channel, the second cooling liquid channel (2D) is an engine side cooling liquid channel, and the third cooling liquid channel (3A) is a bypass side cooling liquid channel.

## Patentansprüche

1. Thermostateinheit (1), umfassend:
ein Gehäuse (2), das einen ersten Kühlflüssigkeitskanal (2B), einen zweiten Kühlflüssigkeitskanal (2D) und ein Thermostatgehäuseteil (2A), das mit dem ersten Kühlflüssigkeitskanal (2B) und dem zweiten Kühlflüssigkeitskanal (2D) verbunden ist, umfasst;
einen Deckel (3) mit einem dritten Kühlflüssigkeitskanal (3A), der mit dem Thermostatgehäuseteil (2A) verbunden ist, und der das Thermostatgehäuseteil (2A) bedeckt, und
einen Thermostat (10) mit einer Elementführung (10h), die in Übereinstimmung mit Änderungen der Temperatur der Kühlflüssigkeit, die in dem Thermostatgehäuseteil (2A) fließt, vorrückt und sich zurückzieht, wobei
wenn der erste Kühlflüssigkeitskanal (2B) durch die Elementführung (10h) blockiert wird, der dritte Kühlflüssigkeitskanal (3A), das Thermostatgehäuseteil (2A) auf der Seite des dritten Kühlflüssigkeitskanals (3A), und der zweite Kühlflüssigkeitskanal (2D) verbunden sind, und wenn die Elementführung (10h) den ersten Kühlflüssigkeitskanal (2B) öffnet, das Thermostatgehäuseteil (2A) auf der Seite des ersten Kühlflüssigkeitskanals (2B) und der zweite Kühlflüssigkeitskanal (2D) verbunden sind,
**dadurch gekennzeichnet, dass**
der erste Kühlflüssigkeitskanal (2B) durch die Bodenfläche der Elementführung (10h) geöffnet und geschlossen wird, und
wenn die Elementführung (10h) den ersten Kühlflüssigkeitskanal (2B) öffnet, das Thermostatgehäuseteil (2A) auf der Seite des dritten Kühlflüssigkeitskanals (3A) und der zweite Kühlflüssigkeitskanal (2D) durch eine äußere periphere Oberfläche der Elementführung (10h) isoliert sind.

2. Thermostateinheit nach Anspruch 1, wobei
der erste Kühlflüssigkeitskanal (2B) und das Thermostatgehäuseteil (2A) durch eine Öffnung (2a) verbunden sind, wobei die Öffnung (2a) durch die Endfläche der Elementführung (10h) geöffnet und geschlossen wird, und der zweite Kühlflüssigkeitskanal (2D) in einem vorbestimmten Abstand von der Öffnung (2a) gebildet ist, und
wenn der erste Kühlflüssigkeitskanal (2B) durch die Elementführung (10h) geöffnet wird, die Kühlflüssigkeit des ersten Kühlflüssigkeitskanals (2B) über die Öffnung (2a) und den Freiraum zwischen der Innenwand des Thermostatgehäuseteils (2A) und der äußeren peripheren Oberfläche der Elementführung (10h) zu dem zweiten Kühlflüssigkeitskanal (2D) strömt.

3. Thermostateinheit nach einem der Ansprüche 1 bis 2, wobei
die innere periphere Oberfläche des Randes des Deckels (3) eine geneigte Fläche hat, die an einer Position bei einem Radius R1 von der Mitte des Thermostatgehäuseteils (2A) beginnt und einen Winkel θ1 aufweist, die äußere periphere Oberfläche des oberen Endes des Gehäuses (2) eine geneigte Fläche hat, die der an einer Position bei einem Radius R2 von der Mitte des Thermostatgehäuseteils (2A) beginnt und einen Winkel θ2 hat, und
R1 kleiner ist als R2, und θ1 und θ2 auf den gleichen Winkel eingestellt sind.

4. Thermostateinheit nach einem der Ansprüche 1 bis 3, wobei ein Ende des Deckels (3) an der äußeren peripheren Oberfläche eines Endes des Gehäuses (2) angebracht ist, und die innere periphere Oberfläche des Endes des Deckels (3) mit der äußeren peripheren Oberfläche des oberen Endes des Gehäuses (2) durch Laserlicht verbunden und integral gemacht ist.

5. Thermostateinheit nach Anspruch 1, wobei in dem Gehäuse (2) und dem Deckel (3) ein Entlüftungskanal (2C) ausgebildet ist, der den ersten Kühlflüssigkeitskanal (2B) und dem dritten Kühlflüssigkeitskanal (3A) verbindet, eine Wackelkugel (5) in dem Entlüftungskanal (2C) untergebracht ist, und der Entlüftungskanal (2C) durch die Wackelkugel (5) geöffnet und geschlossen wird.

6. Thermostateinheit nach Anspruch 5, wobei eine kreisförmige Nut (2e) konzentrisch mit dem Thermostatgehäuseteil (2A) in der Außenseite der offenen Endoberfläche des Thermostatgehäuseteils (2A) des Gehäuses (2) gebildet ist, und eine Öffnung des Entlüftungskanals (2C) in einer Bodenfläche der Nut (2e) gebildet ist.

7. Thermostateinheit nach Anspruch 5, welche die Wackelkugel (5) in dem Entlüftungskanal (2C) auf der Seite des Gehäuses (2) beherbergt, und die ferner ein in dem Entlüftungskanal (2C) auf der Seite des Gehäuses (2) untergebrachtes Wackelkugelhalteelement (6) umfasst.

8. Thermostateinheit nach einem der Ansprüche 1 bis 7, wobei der erste Kühlflüssigkeitskanal (2B) ein radiatorseitiger Kühlflüssigkeitskanal ist, der zweite Kühlflüssigkeitskanal (2D) ist ein motorseitiger Kühlflüssigkeitskanal ist, und der dritte Kühlflüssigkeitskanal (3A) ist ein bypassseitiger Kühlflüssigkeitskanal ist.

## Revendications

1. Unité thermostatique (1), comprenant :
un carter (2) comprenant un premier canal de liquide de refroidissement (2B), un deuxième canal de liquide de refroidissement (2D), et une pièce abritant un thermostat (2A) qui est reliée au premier canal de liquide de refroidissement (2B) et au deuxième canal de liquide de refroidissement (2D) ;
un couvercle (3) ayant un troisième canal de liquide de refroidissement (3A) qui est relié à la pièce abritant un thermostat (2A) et qui recouvre la pièce abritant un thermostat (2A) ; et
un thermostat (10) ayant un élément de guidage (10h) qui avance et se rétracte en fonction des variations de température du liquide de refroidissement circulant dans la pièce abritant un thermostat (2A), dans laquelle
quand le premier canal de liquide de refroidissement (2B) est bouché par l'élément de guidage (10h), le troisième canal de liquide de refroidissement (3A), la pièce abritant un thermostat (2A) sur le côté du troisième canal de liquide de refroidissement (3A) et le deuxième canal de liquide de refroidissement (2D) sont reliés, et quand l'élément de guidage (10h) ouvre le premier canal de liquide de refroidissement (2B), la pièce abritant un thermostat (2A) sur le côté du premier canal de liquide de refroidissement (2B) et le deuxième canal de liquide de refroidissement (2D) sont reliés,
**caractérisée en ce que**
le premier canal de liquide de refroidissement (2B) est ouvert et fermé par la surface inférieure de l'élément de guidage (10h), et
quand l'élément de guidage (10h) ouvre le premier canal de liquide de refroidissement (2B), la pièce abritant un thermostat (2A) sur le côté du troisième canal de liquide de refroidissement (3A) et le deuxième canal de liquide de refroidissement (2D) sont isolés par une surface périphérique externe de l'élément de guidage (10h).

2. Unité thermostatique selon la revendication 1, dans laquelle
le premier canal de liquide de refroidissement (2B) et la pièce abritant un thermostat (2A) sont reliés par un orifice (2a), l'orifice (2a) est ouvert et fermé par la surface d'extrémité de l'élément de guidage (10h), et le deuxième canal de liquide de refroidissement (2D) est formé à une distance prédéterminée de l'orifice (2a), et
quand le premier canal de liquide de refroidissement (2B) est ouvert par l'élément de guidage (10h), le liquide de refroidissement du premier canal de liquide de refroidissement (2B) circule jusqu'au deuxième canal de liquide de refroidissement (2D) par l'orifice (2a), et un espace libre entre la paroi interne de la pièce abritant un thermostat (2A) et la surface périphérique externe de l'élément de guidage (10h).

3. Unité thermostatique selon l'une quelconque des revendications 1 à 2, dans laquelle
la surface périphérique interne du bord du couvercle (3) a une surface inclinée qui part d'une position à un rayon R1 du centre de la pièce abritant un thermostat (2A) et a un angle 1, la surface périphérique externe de l'extrémité supérieure du carter (2) a une surface inclinée qui part d'une position à un rayon R2 du centre de la pièce abritant un thermostat (2A) et a un angle 2, et
R1 est plus petit que R2, et 1 et 2 sont ajustés au même angle.

4. Unité thermostatique selon l'une quelconque des revendications 1 à 3, dans laquelle une extrémité du couvercle (3) est installée sur la surface périphérique externe d'une extrémité du carter (2), et la surface périphérique interne de l'extrémité du couvercle (3) est reliée à la surface périphérique externe de l'extrémité supérieure du carter (2) par lumière laser et rendue solidaire.

5. Unité thermostatique selon la revendication 1, dans laquelle un canal de purge d'air (2C) reliant le premier canal de liquide de refroidissement (2B) et le troisième canal de liquide de refroidissement (3A) est formé dans le carter (2) et le couvercle (3), une bille mobile (5) est abritée dans le canal de purge d'air (2C), et le canal de purge d'air (2C) est ouvert et fermé par la bille mobile (5).

6. Unité thermostatique selon la revendication 5, dans laquelle une rainure circulaire (2e) concentrique avec la pièce abritant un thermostat (2A) est formée dans l'extérieur de la surface d'extrémité ouverte de la pièce abritant un thermostat (2A) du carter (2), et une ouverture du canal de purge d'air (2C) est formée dans une surface inférieure de la rainure (2e).

7. Unité thermostatique selon la revendication 5, qui abrite la bille mobile (5) dans le canal de purge d'air (2C) sur le côté du carter (2), et qui comprend en outre une pièce retenant une bille mobile (6) abritée dans le canal de purge d'air (2C) sur le côté du carter (2).

8. Unité thermostatique selon l'une quelconque des revendications 1 à 7, dans laquelle le premier canal de liquide de refroidissement (2B) est un canal de liquide de refroidissement côté radiateur, le deuxième canal de liquide de refroidissement (2D) est un canal de liquide de refroidissement côté moteur, et le troisième canal de liquide de refroidissement (3A) est un canal de liquide de refroidissement côté dérivation.
